Europäisches Patentamt

European Patent Office

Office européen des brevets

(11) Veröffentlichungsnummer: **0 451 601 B1**

## (12) EUROPÄISCHE PATENTSCHRIFT

(45) Veröffentlichungstag der Patentschrift: **05.10.94**

(21) Anmeldenummer: **91104727.2**

(22) Anmeldetag: **26.03.91**

(51) Int. Cl.⁵: **B01D 1/24**

(54) **Kontinuierliches Verfahren zur Trennung von Lösungen und Suspensionen in einen rieselfähigen Feststoff und in ein weitgehend feststofffreies Destillat.**

(30) Priorität: **07.04.90 DE 4011382**

(43) Veröffentlichungstag der Anmeldung:
**16.10.91 Patentblatt 91/42**

(45) Bekanntmachung des Hinweises auf die
Patenterteilung:
**05.10.94 Patentblatt 94/40**

(84) Benannte Vertragsstaaten:
**BE CH DE ES FR GB IT LI NL**

(56) Entgegenhaltungen:
**EP-A- 0 045 912**
**EP-A- 0 267 531**
**DE-A- 1 921 045**
**DE-A- 1 964 949**
**DE-B- 2 724 360**

(73) Patentinhaber: **BAYER AG**

**D-51368 Leverkusen (DE)**

(72) Erfinder: **Casper, Clemens, Dr.**
**Giesenweg 76**
**W-4150 Krefeld (DE)**
Erfinder: **Weinschenck, Jörgen, Dipl.-Ing.**
**Breiten Dyk 109**
**W-4150 Krefeld (DE)**

**Beschreibung**

Die Erfindung betrifft ein kontinuierliches Verfahren zur Trennung von Lösungen und Suspensionen in einen rieselfähigen Feststoff und in ein weitgehend feststofffreies Destillat, wobei ein beheizbares Strömungsrohr verwendet wird.

Solche Trennverfahren sind in bestimmten Fällen beispielsweise bei wäßrigen anorganischen und organischen Suspensionen, wie Chromhydroxid, Farben und Armstrongsäure erforderlich. Besonderen Stellenwert erhalten sie durch Anwendung im Umweltschutz und im Recycling, z.B. bei der Aufarbeitung von salzhaltigen Abwässern.

Man betreibt bis heute solche Trennverfahren im allgemeinen in diskontinuierlich arbeitenden Apparaten, wie z.B. Rührkessel und Schaufeltrockner.

Dabei ist der Zeit- und Kostenaufwand wegen des Chargenbetriebes erheblich; die Wärmeübertragung ist schlecht und die ganze Charge durchläuft zur gleichen Zeit die zähviskose, breiige Phase, d.h. es treten zeitweise große Kräfte auf, die bei der Apparatedimensionierung berücksichtigt werden müssen. Dabei handelt es sich um einen offenen Destillatprozeß, d.h. in der Endphase des Prozesses liegen die Temperaturen sehr hoch, die treibenden Temperaturgefälle dagegen sehr niedrig. Dies führt zu langen Verweilzeiten in dieser Phase, was bei organischen Produkten Nachpolymerisation, verbunden mit starker Krustenbildung, zur Folge haben kann. Die Verkrustungen sind dann ebenfalls nur noch bergmännisch abbaubar. Füllung und Leerung des Apparates sind vielfach mit Umweltbelästigungen verbunden.

Wegen dieser Nachteile strebt man kontinuierliche Verfahren an. Der Hauptvorteil der kontinuierlichen Verfahren besteht darin, daß sich immer nur ein kleiner Teil des Produktes gerade in dem problematischen Bereich der zähviskosen, klebrigen Phase befindet, also nur mäßige Kräfte gebraucht werden und die Gefahr der Nachpolymerisation verringert wird. Kontinuierliche Verfahren, die von der Industrie als allgemeiner Stand der Technik angeboten werden, sind die Walzentrocknung, die Sprühtrocknung und die mechanische Dünnschichtverdampfung. Bei der Walzentrocknung wird eine dünne Schicht auf eine beheizte drehende Walzenoberfläche aufgetragen. Das Lösungsmittel dampft während der Walzendrehung ab, der Feststoff wird mit einem Messer abgeschabt. Nachteilig bei diesem Verfahren sind die schlechte Wärmeübertragung, die hohen Investitionskosten, die Neigung der Einspeisedüsen zur Verstopfung und die offene Verdampfung an der Filmoberfläche, die umweltbelästigend sein kann. Bei der Sprühverdampfung wird das Produkt überhitzt und dann unter Zuhilfenahme von Fremddampf in einen großen Behälter hinein gesprüht, in dem die Brüden vom Feststoff abgetrennt werden. Hauptnachteile des Verfahrens sind die hohen Investitionskosten, der große Energieüberschuß, mit dem gearbeitet werden muß und die hohe Vorüberhitzung der Lösung. Bei der mechanischen Dünnschichtverdampfung wird mit Hilfe von rotierenden Wischerblättern ein dünner Film auf einer vertikal angeordneten beheizten Rohrwand ausgebreitet. Die Lösung bewegt sich als Film spiralförmig von oben nach unten. Dabei dampft das Lösungsmittel aus. Größere Krusten können sich auf den Wänden nicht bilden, da sie von den Wischern abgeschabt werden. Hauptnachteil bei diesem Verfahren ist neben den hohen Investitionskosten und der Störanfälligkeit der Apparatur die Ablagerung des Produkts auf den Wischerblättern, die sich nicht selbstständig reinigen lassen. Hier bauen sich Krustenberge auf, die, wenn nicht Reinigungen der Wischerblätter in kurzen Zeitabständen vorgenommen werden, zum Abreißen der Blätter führen. Außerdem wird auch der Austrittskonus des Dünnschichtapparates nicht geschabt, was Verstopfungen zur Folge haben kann.

Im EP-A-0 045 912 wird ein Verfahren beschrieben, bei dem nach einer Flash-Verdampfung die Lösung in einem gewendelten Durchlaufströmungsrohr bis zu einem rieselfähigen Feststoff aufkonzentriert wird. Dabei kann es zu pfropfenartigen Anbackungen an den beheizten Wänden kommen, die sich jedoch durch einen Selbstreinigungsmechanismus des Rohres wieder von der Wand ablösen. Während der Bildung des Pfropfens entsteht ein Druckaufbau vor der Verengung, der in vielen Fällen dazu führt, daß der abgelöste Pfropfen sich nicht auflöst, sondern mit höchster Geschwindigkeit den unteren Teil des Rohres durcheilt und dabei einen Schwall von in Folge des Druckaufbaues kondensierten Lösungsmittels nach sich zieht. Das hat zur Folge, daß kurzfristig feuchtes Produkt aus dem Rohr austritt, sich auf den Wänden des folgenden Abscheiders absetzt und dort anbackt. Im Laufe der Zeit bauen sich so Krustenberge im Abscheider auf, die schließlich zur Verstopfung des ganzen Abscheiders führen und ihn damit funktionsunfähig machen. Bei anderen Produkten setzt eine schleichende Belegung der beheizten Rohrwände ein, die durch den Selbstreinigungsmechanismus des Rohres nicht beseitigt werden kann und eine allmähliche Leistungsminderung des Rohres bewirkt. Dies führt dazu, daß der Feststoff im Laufe der Zeit immer feuchter aus dem Rohr austritt mit den Folgen im Abscheider, die bereits weiter oben beschrieben sind. Das in EP-A-0 045 912 beschriebene Verfahren gewährleistet also in einer ganzen Reihe von Fällen keinen störungsfreien Betrieb. Es muß daher verbessert werden, um einen störungsfreien Betrieb auch bei Problemfällen zu garantieren.

2

Es besteht die Aufgabe, salzhaltige Abwässer und bei Produktionen anfallende organische, ebenfalls mit Salz beladene Rückstände so aufzuarbeiten, daß das Nutzprodukt möglichst vollständig und rein zurückgewonnen wird und das Abfallprodukt möglichst niedrige Deponie- oder Verbrennungskosten verursacht.

Diese Aufgabe wird dadurch gelöst, daß die Feststoffaufkonzentrierung in diesem Strömungsrohr nur bis zu einer oberen Grenze durchgeführt wird, die durch eine schleichende Belegung der Wandung des Strömungsrohres mit Feststoff bzw. durch eine Totalverstopfung des Strömungsquerschnittes gegeben ist, daß die Aufkonzentrierung dann in einem zweiten beheizbaren Strömungsrohr weitergeführt wird, in das das erste Strömungsrohr unter einem Winkel einmündet, wobei der Strömungsquerschnitt des zweiten Strömungsrohres mindestens das 50-fache desjenigen des ersten Strömungsrohres beträgt, und wobei der Aufbau von Krustenbergen im zweiten Strömungsrohr durch Abschaben der Wandung verhindert wird, und daß das Feststoffprodukt zu einem rieselfähigen Zustand nachgetrocknet wird und am Ende des zweiten Strömungsrohres die in den beiden Strömungsrohren entstandenen Brüden abgetrennt und abgeführt werden.

Die Aufteilung in zwei Stufen bringt den besonderen Vorteil, daß man auch solche Produkte aus einer Lösung in einen rieselfähigen Feststoff überführen kann, die eine stark zähviskose Phase durchlaufen und dabei sehr zu Anbackungen neigen. Zu diesem neuen Verfahren gibt es keine echte Alternative und auch die diskontinuierlichen Verfahren sind nur eine Notlösung für solche problematischen Produkte. Besonders vorteilhaft ist, daß das erste Strömungsrohr mit einer größeren Leistungsdichte betrieben werden kann, da hohe Strömungsgeschwindigkeiten und große treibende Temperaturgefälle zugelassen werden können Außerdem ist es preiswert herstellbar. Dadurch, daß das erste Strömungsrohr unter einem Winkel einmündet bzw. öffnet, wird das Produkt mit hoher Energie gegen die Innenwandung des zweiten Strömungsrohres geschleudert. Die senkrechte Mündung ist dabei am vorteilhaftesten. Das zweite Strömungsrohr kann relativ klein gehalten werden, da die für die Durchführung des Verfahrens notwendige Wärme zum größten Teil bereits im ersten Strömungsrohr in das Produkt eingetragen wird. Die Größe richtet sich allein nach der Verweilzeit, die gebraucht wird, um die Oberfläche des Feststoffes auszutrocknen, es sei denn, man wolle auch noch die innere Feuchte des Feststoffes entfernen. Auf diese Weise kann auch dieses Strömungsrohr kostengünstig gehalten werden. Die im ersten Strömungsrohr entstandenen Brüden werden mit durch das zweite geführt und erst hinter dem zweiten Strömungsrohr abgetrennt. Um die Gefahr einer schleichenden Verklebung mit Feststoff herabzusetzen, ist die Innenwandung des ersten Strömungsrohres vorzugsweise mit Polytetrafluorethylen oder Emaille beschichtet.

Vorzugsweise wird als erstes Strömungsrohr ein gewendeltes Verdampferrohr verwendet, dessen Strömungsquerschnitt so bemessen ist, daß eine Austrittsgeschwindigkeit des Dampffeststoffgemisches von mindestens 50 m/sec erzielt wird.

Auf diese Weise wird das Erreichen der oberen Grenzbedingungen vermieden, weil die hohe Strömungsgeschwindigkeit das Ansetzen von Feststoffen verhindert.

Gemäß einer besonderen Ausführungsform im ersten Strömungsrohr werden Wendeln von mindestens 20° Steigung verwendet.

Dadurch wird das Produkt im Strömungsrohr gleichmäßiger über den ganzen Umfang verteilt, was die Gefahr der Krustenbildung reduziert.

Für den zweiten Strömungskanal wird vorzugsweise ein Drehrohr verwendet, dessen Innenwandung laufend durch gegensinnig zu diesem Drehrohr rotierende Schabemesser gereinigt wird.

Solche Messer sind beispielsweise auf einer Welle angebracht, bzw. auf eine Welle aufschiebbaren Hülsen, und haben Schraubengewindeform. Ihre Kanten liegen bei der Rotation kurzzeitig an der Innenwandung des Drehrohres an und schaben die Innenwandung des Rohres ab.

Weitere rotierende Schabemesser und Schlagmesser können in den Stirnschalen angeordnet sein.

Das erste Strömungsrohr mündet dabei unter einem Winkel, vorzugsweise senkrecht, in das Drehrohr ein, so daß der mit hoher Geschwindigkeit austretende Strahl aus Dampf und Feststoff gegen die Innenwandung des Drehrohres geschleudert und dort gebrochen wird. Der noch feuchte Feststoff klebt an der Wand an, der Dampf wird umgelenkt und verliert seine kinetische Energie. Infolge der gegenüber dem ersten Strömungsrohr wesentlich vergrößerten Querschnittsfläche verringert sich die Dampfgeschwindigkeit soweit, daß sich der noch im Dampf mitgeführte Feststoff über die Länge des Rohres durch Schwerkraft abscheidet. Das bereits rieselfähige Feststoffprodukt bildet die im Drehrohr übliche Rollschicht aus und bewegt sich so zum unteren Ende des Drehrohres hin, wo es über eine Schleuse ausgetragen werden kann. Das noch klebrige Produkt haftet in einer dünnen Schicht auf der beheizten Innenwandung des Rohres, wird abgeschabt und fällt in die Rollschicht.

Alternativ verwendet man einen geneigt angeordneten Paddelschneckenapparat.

Ein solcher besteht beispielsweise aus einem beheizbaren Gehäuse und zwei sich darin gegenläufig drehenden Wellen, deren Achsen parallel zur Gehäuseachse liegen und mit schräg angeordneten Paddeln bestückt sind, die sich gegenseitig und die Innenwandung des Gehäuses von Krusten frei schaben. Die Austrittsfläche des ersten Strömungsrohres steht vorzugsweise senkrecht auf den Achsen der Wellen und ist wesentlich kleiner als die freie Querschnittsfläche des Paddelschneckenapparates. Auf diese Weise werden die bereits bei dem Drehrohr beschriebenen Effekte der Strahlbrechung, der Dampfgeschwindigkeitsreduzierung und des Haftens der klebrigen Feststoffe an der Innenwandung erreicht. Mit den Paddeln wird die Gehäuseinnenwandung immer wieder vom Produkt freigeschabt. Zugleich wird das an der Innenwandung getrocknete Produkt durch die Paddel zerkleinert und, unterstützt durch eine leichte Neigung der Gehäuseachse etwa um 10°, zum unteren Ende des Paddelschneckenapparates transportiert. Hier kann das mittlerweile rieselfähige Produkt über eine konventionelle Schleuse ausgetragen werden. An dieser Stelle wird auch der im ersten und im zweiten Strömungsrohr erzeugte Dampf abgeführt.

Sind größere Ausgangsmengen mit ungesättigtem Feststoffgehalt zu trennen, so ordnet man dem ersten Strömungsrohr mindestens einen Verdampfer vor.

Dadurch läßt sich eine Vorverdampfung durchführen, so daß die eigentlichen Strömungsrohre besser ausgenutzt werden können Es eignen sich herkömmliche Umlauf- oder Fallfilmverdampfer. Solche sind beispielsweise in Ullmanns Encyclopädie der technischen Chemie, 1. Band, Chemischer Apparatebau und Verfahrenstechnik, Verlag Urban und Schwarzenberger, München/Berlin, 1951, Seite 536 und 37 beschrieben. Sie sind insbesondere bei der Abwasseraufbereitung zweckmäßig.

In der Zeichnung sind zwei Anlagen zur Durchführung des neuen Verfahrens rein schematisch dargestellt und nachstehend näher beschrieben. Es zeigen:

Fig. 1 eine erste Anlage mit einem Drehrohr als zweites Strömungsrohr,

Fig. 2 eine zweite Anlage mit einem Paddelschneckenapparat als zweites Strömungsrohr und

Fig. 3 einen Schnitt gemäß Linie A-B in Fig. 2.

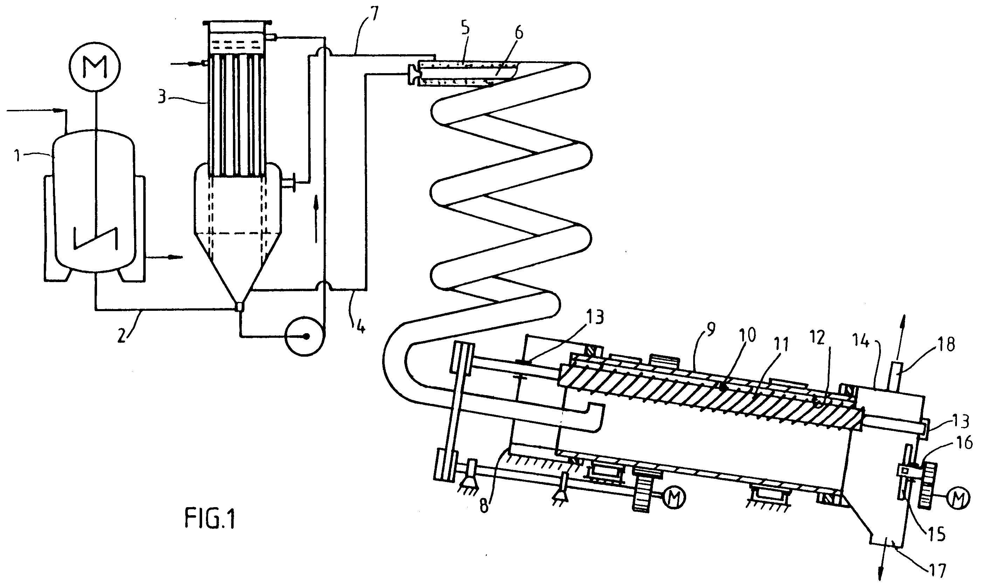

In Fig. 1 gelangt von einem beheizbaren Behälter 1 eine Suspension über eine Leitung 2 in einen beheizbaren, als Fallfilmverdampfer ausgebildeten Vorverdampfer 3 (Ullmann, Chemischer Apparatebau und Verfahrenstechnik, 1951, Verlag Urban und Schwarzenberg, Berlin/München, Seite 537, Abb. 836). Aus diesem Vorverdampfer 3 wird das angedickte Konzentrat über eine Leitung 4 in ein mit einem Heizmantel 5 versehenes, als stetige Wendel von 20° Neigung ausgebildetes Strömungsrohr 6 eingebracht. Die am Vorverdampfer 3 entstandenen Brüden werden über eine Leitung 7 als Heizmittel in den Heizmantel 5 eingespeist. In diesem Strömungsrohr 6 wird das Produkt weiter aufkonzentriert. Mit einer mittleren Ausgangsgeschwindigkeit von 80 m/sec gelangt dieses Gemisch aus Konzentrat und Brüden in die Kopfschale 8 eines zweiten, als Drehrohr ausgebildeten Strömungsrohres 9, dessen Strömungsquerschnitt das 60-fache desjenigen des ersten Strömungsrohres 6 beträgt. Das Produkt wird dabei senkrecht gegen die Innenwandung 12 geschleudert. Im Drehrohr 9 ist in Drehrichtung etwa 50° hinter der Scheitellinie eine gegensinnig zum Drehrohr 9 angetriebene Messerwelle 10 vorgesehen, deren Messer 11 schraubenlinienförmig gestaltet sind und die Innenwandung 12 des Drehrohres 9 abkratzen. Die Messerwelle 10 besitzt eine Lagerung 13 in der Kopfschale 8 und eine Lagerung 13 in der Fußschale 14. Innerhalb des Drehrohres 9 geht das Produkt in einen rieselfähigen Feststoff über. Ein in die Fußschale 14 hineinreichender angetriebener und mit Schlag- und Schabemessern 15 besetzter Wellenstumpf 16 sorgt dafür, daß auch hier keine Anbackungen und Verklumpungen auftreten können, damit das Produkt störungsfrei durch den Auslaß 17 abgeführt werden kann. Die Brüden verlassen die Fußschale 14 durch einen Abzug 18.

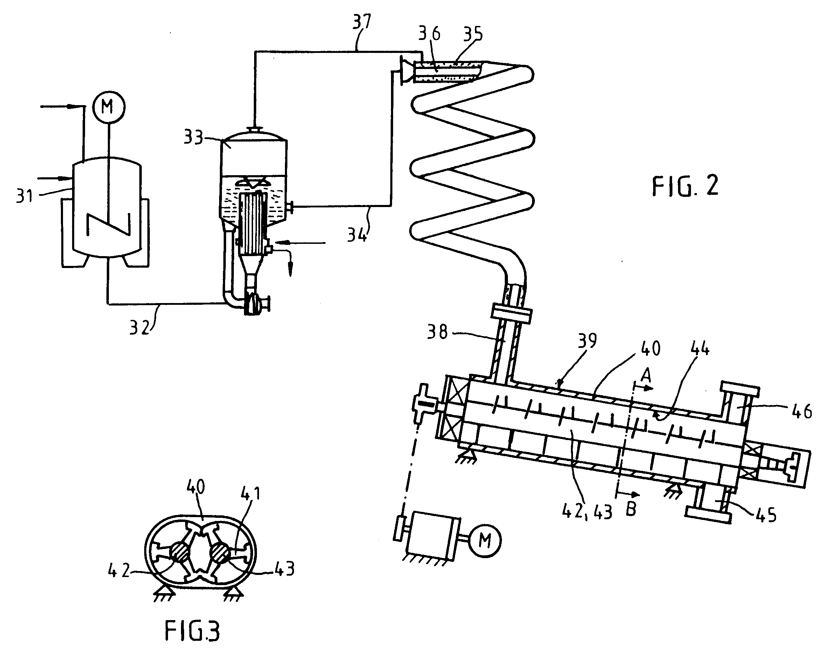

In Fig. 2 und 3 gelangt von einem beheizbaren Behälter 31 eine Suspension über eine Leitung 32 in einen beheizbaren, als Umlaufverdampfer ausgebildeten Vorverdampfer 33 (Ullmann, siehe oben, Seite 536, Abb. 835). Aus diesem Vorverdampfer 33 wird das angedickte Konzentrat über eine Leitung 34 in ein mit einem Heizmantel 35 versehenes, als stetige Wendel von 25° Neigung ausgebildetes erstes Strömungsrohr 36 eingebracht. Die im Vorverdampfer 33 entstandenen Brüden werden als Heizmittel in den Heizmantel 35 eingeführt. In diesem Strömungsrohr 36 wird das Produkt weiter aufkonzentriert. Mit einer mittleren Geschwindigkeit von 60 m/sec gelangt dieses Gemisch aus Konzentrat und Brüden durch einen Einlaßstutzen 38 senkrecht in ein zweites, als Paddelschneckenapparat ausgebildetes Strömungsrohr 39, dessen Querschnitt das 80-fache desjenigen des ersten Strömungsrohres 36 beträgt. Der Paddelschneckenapparat 39 weist ein beheizbares Gehäuse 40 auf, in welchem zwei gegensinnig drehende, miteinander kämmende, mit unter 10° angestellten Paddeln 41 besetzte Wellen 42 und 43 angeordnet sind. Die Paddeln 41 schaben die Innenwandung 44 des Gehäuses 40 und sich gegenseitig laufend ab und verhindern auf diese Weise Anbackungen und Verkrustungen. Das getrocknete rieselfähige Produkt wird über einen Auslaß 45 ausgetragen und die Brüden ziehen über einen Abzugsstutzen 46 ab.

Beispiel 1

Auftrennung einer 50 %igen wäßrigen Armstrongsäuresuspension in rieselfähige Armstrongsäure und Wasser.

Verwendet wird die Anlage gemäß Fig. 1 jedoch ohne Vorverdampfer.

```
Durchsatz 25 kg/h

Erstes Strömungsrohr: gewendeltes Strömungsrohr

Rohrinnendurchmesser:    15 mm

Strömungsquerschnitt: 177 mm²

Rohrlänge:                6 m

Wendeldurchmesser:      250 mm

Steigung:                20°

Heizmittel:          thermisch isomere Benzyltoluole
                     (Handelsname Marlothermöl)

Heizmitteltemperatur: 300° C

Systemdruck              1 bar_a

Drosselorgan am Ein-
tritt des ersten
Strömungsrohres:     geregeltes Nadelventil

Produkttemperatur vor
Drosselorgan:        200° C

Produkttemperatur hin-
ter Drosselorgan:       160° C.
```

Da das Eigendampfpotential nicht genügend groß ist, wird zur Verminderung von Verstopfungen Stickstoff miteingespeist:
Stickstoffmenge 5 kg/h
Zweites Strömungsrohr: Drehrohr mit rotierender Messerwelle
Drehrohrdurchmesser: 200 mm
Drehrohrlänge: 1 m
Strömungsquerschnitt: 31 000 mm²
Messerwellendurchmesser: 50 mm
Messer: Schneckengewinde
Neigung des Drehrohres: 10°
Drehzahl: 30 U/min.
Heizmittel: Marlothermöl
Heizmitteltemperatur: 270° C

Beispiel 2

Auftrennung einer 10 %igen wäßrigen Salzlösung in rieselfähiges Salz und Wasser.
Verwendet wird die Anlage gemäß Fig. 2, jedoch anstelle des Vorverdampfers findet eine Flash-Verdampfung statt.
Durchsatz 25 kg/h
Erstes Strömungsrohr: gewendeltes Strömungsrohr
Rohrinnendurchmesser: 15 mm
Strömungsquerschnitt: 177 mm²

Rohrlänge: 6 m
Wendeldurchmesser: 250 mm
Steigung: 20°
Heizmittel: Marlothermöl
Heizmitteltemperatur: 150°C
Systemdruck: 1 bar$_a$
Zweites Strömungsrohr: Paddelschneckenapparat
Gehäuselänge: 2300 mm
Wellendurchmesser: 45 mm
Paddelumfangskreisdurchmesser: 1300 mm
Schrägstellung der Paddel: 5°
Neigung des Paddelschneckenapparates: 10°
Strömungsquerschnitt: 13 000 mm$^2$
Heizmittel: Marlothermöl
Heizmitteltemperatur: 200°C
Drehzahl: 160 U/min.

**Patentansprüche**

1. Kontinuierliches Verfahren zur thermischen Auftrennung von Lösungen und Suspensionen in einen rieselfähigen Feststoff und in ein weitgehend feststofffreies Destillat, wobei ein beheizbares Strömungsrohr (6, 36) verwendet wird, dadurch gekennzeichnet, daß die Feststoffaufkonzentrierung in diesem Strömungsrohr (6, 36) nur bis zu einer oberen Grenze durchgeführt wird, die durch eine schleichende Belegung der Innenwandung dieses Strömungsrohres (6, 36) mit Feststoff bzw. durch eine Totalverstopfung des Strömungsquerschnittes gegeben ist; daß die Aufkonzentrierung dann in einem zweiten beheizbaren Strömungsrohr (9, 39) weitergeführt wird, in das das erste Strömungsrohr (6, 36) unter einem Winkel einmündet, wobei der Strömungsquerschnitt des zweiten Strömungsrohrs (9, 39) mindestens das 50-fache desjenigen des ersten Strömungsrohres (6, 36) beträgt, und wobei der Aufbau von Krustenbergen im zweiten Strömungsrohr (9, 39) durch Abschaben der Innenwandung (12, 44) verhindert wird; und daß das Feststoffprodukt zu einem rieselfähigen Zustand nachgetrocknet und am Ende des zweiten Strömungsrohres (9, 39) ausgetragen und die in den beiden Strömungsrohren (6; 9; 36, 39) entstandenen Brüden abgetrennt und abgeführt werden.

2. Verfahren nach Anspruch 1, dadurch gekennzeichnet, daß als erstes Strömungsrohr (6, 36) ein gewendeltes Verdampferrohr (6, 36) verwendet wird, dessen Strömungsquerschnitt so bemessen ist, daß eine Austrittsgeschwindigkeit des Dampf-Feststoffgemisches von mindestens 50 m/sec erzielt wird.

3. Verfahren nach Anspruch 1 und 2, dadurch gekennzeichnet, daß im ersten Strömungsrohr (6, 36) Wendeln von mindestens 20° Steigung verwendet werden.

4. Verfahren nach einem der Ansprüche 1 bis 3, dadurch gekennzeichnet, daß als zweites Strömungsrohr (9) ein Drehrohr (9) verwendet wird, dessen Innenwandung (12) durch eine gegensinnig zum Drehrohr (9) rotierende Messerwelle (10) gereinigt wird.

5. Verfahren nach einem der Ansprüche 1 bis 3, dadurch gekennzeichnet, daß als zweites Strömungsrohr (39) ein geneigt angeordneter Paddelschneckenapparat (39) verwendet wird.

6. Verfahren nach einem der Ansprüche 1 bis 5, dadurch gekennzeichnet, daß dem ersten Strömungsrohr (6, 36) mindestens ein Vorverdampfer (3, 33) vorgeordnet wird.

**Claims**

1. Continuous process for the thermal separation of solutions and suspensions into a free-flowing solid and a distillate that is largely free of solids, whereby use is made of a reatable flow tube (6, 36), characterised in that the concentration of the solid is raised in this flow tube (6, 36) only as far as an upper limit resulting from a creeping coating of the inner wall of this flow tube (6, 36) with solid or alternatively from a total blockage of the cross-sectional flow area; in that the concentration is then raised further in a second heatable flow tube (9, 39), into which the first flow tube (6, 36) leads at an

EP 0 451 601 B1

angle, whereby the cross-sectional flow area of the second flow tube (9, 39) amounts to at least 50 times that of the first flow tube (6, 36), and whereby the build-up of incrustations in the second flow tube (9, 39) is prevented by scraping of the inner wall (12, 44); and in that the solid product is subjected to further drying until it attains a free-flowing state and is discharged at the end of the second flow tube (9, 39) and the vapours formed in the two flow tubes (6, 9; 36, 39) are separated and removed.

2. Process according to Claim 1, characterised in that as the first flow tube (6, 36) use is made of a coiled evaporator tube (6, 36), the cross-sectional flow area of which is dimensioned in such a way that an emission velocity of the vapour-solid mixture amounting to at least 50 m/sec is attained.

3. Process according to Claims 1 and 2, characterised in that within the first flow tube (6, 36) use is made of coils with a pitch of at least 20°.

4. Process according to one of Claims 1 to 3, characterised in that as the second flow tube (9) use is made of a rotary tube (9), the inner wall of which (12) is cleaned by a knife shaft (10) rotating in the opposite direction to the rotary tube (9).

5. Process according to one of Claims 1 to 3, characterised in that as the second flow tube (39) use is made of an inclined paddle-screw device (39).

6. Process according to one of Claims 1 to 5, characterised in that at least one pre-evaporator (3, 33) is arranged upstream of the first flow tube (6, 36).

**Revendications**

1. Procédé continu de séparation thermique de solutions et de suspensions en une matière solide coulante et en un distillat largement exempt de matières solides, dans lequel on utilise un tuyau d'écoulement pouvant être chauffé (6, 36), caractérisé en ce qu'on effectue la concentration en matière solide dans ce tuyau d'écoulement (6, 36) seulement jusqu'à une limite supérieure qui est donnée par un recouvrement progressif de la paroi interne de ce tuyau d'écoulement (6, 36) avec de la matière solide ou par un bouchage total de la section de passage, en ce qu'on continue ensuite la concentration dans un deuxième tuyau d'écoulement pouvant être chauffé (9, 39) dans lequel le premier tuyau d'écoulement (6, 36) aboutit selon un angle, la section de passage du deuxième tuyau d'écoulement (9, 39) étant au moins égale à cinquante fois celle du premier tuyau d'écoulement (6, 36), et la constitution d'amas de croûtes étant empêchée dans le deuxième tuyau d'écoulement (9, 39) par raclage de la paroi interne (12, 44), et en ce qu'on sèche le produit de matière solide en un état coulant et qu'à la fin du deuxième tuyau d'écoulement (9, 39) on le décharge et on sépare et évacue les vapeurs créées dans les deux tuyaux d'écoulement (6, 9; 36, 39).

2. Procédé selon la revendication 1, caractérisé en ce qu'on utilise comme premier tuyau d'écoulement (6, 36) un tuyau d'évaporateur hélicoïdal (6, 36) dont la section de passage est dimensionnée de sorte qu'on obtient une vitesse de sortie du mélange vapeur-matière solide d'au moins 50 m/s.

3. Procédé selon les revendications 1 et 2, caractérisé en ce qu'on utilise dans le premier tuyau d'écoulement (6, 36) des hélices de montée d'au moins - 20°.

4. Procédé selon l'une quelconque des revendications 1 à 3, caractérisé en ce qu'on utilise comme deuxième tuyau d'écoulement (9) un tuyau rotatif (9) dont la paroi interne (12) est nettoyée par un arbre muni de couteaux (10) tournant en sens inverse par rapport au tuyau rotatif (9).

5. Procédé selon l'une quelconque des revendications 1 à 3, caractérisé en ce qu'on utilise comme deuxième tuyau d'écoulement (39) un appareil à vis sans fin à pales (39) disposé de façon inclinée.

6. Procédé selon l'une quelconque des revendications 1 à 5, caractérisé en ce qu'on dispose avant le premier tuyau d'écoulement (6, 36) au moins un pré-évaporateur (3, 33).

7

FIG.1

EP 0 451 601 B1

FIG. 2

FIG.3

9